# DEMANDE DE BREVET EUROPEEN

(11) **EP 3 046 329 A1**
(43) Date de publication de la demande: **20.07.2016**
(21) Numéro de dépôt: 16150320.6
(22) Date de dépôt: 06.01.2016
(51) Int. Cl.: H04N 21/2343, H04N 21/63, H04N 21/647, A63F 13/86, H04N 21/658

(54) **PROCÉDÉ DE TRAITEMENT D'UN FLUX MULTIMÉDIA, DISPOSITIF ET PROGRAMME D'ORDINATEUR CORRESPONDANTS**

(30) Priorité: 13.01.2015 FR 1550254
(71) Demandeur: Orange, 75015 Paris (FR)
(72) Inventeur: BRELIVET, Hervé, 22300 LANNION (FR)
(74) Mandataire: Vidon Brevets & Stratégie

(57) **Abrégé**

L'invention concerne un procédé (10) de traitement de flux multimédia entre une plateforme (20) de distribution numérique d'applications interactives et un terminal (30) client, connectés au travers d'un réseau de communication et communiquant selon un premier protocole (P₁) de communication, comprenant les étapes suivantes, mises en oeuvre par un dispositif intermédiaire (10) distinct du terminal client :
- modification (130) d'un flux multimédia (F_{D}) conforme au premier protocole de communication (P₁), obtenu à partir d'un flux multimédia (F) transmis de la plateforme de distribution numérique d'applications interactives au terminal client, générant au moins un flux multimédia modifié (F_{M}) conforme à au moins un deuxième protocole (P₂) de communication distinct dudit premier protocole de communication,
- transmission (140) dudit au moins un flux multimédia modifié (F_{M}) à au moins un dispositif de restitution (51) en utilisant ledit au moins un deuxième protocole (P₂) de communication.

## Description

### 1. Domaine de l'invention

La présente technique se rapporte au domaine des applications interactives, telles que le jeu vidéo en ligne, et plus particulièrement à une méthode permettant de restituer les flux multimédia associés à de telles applications interactives, tels que des séquences de jeu vidéo d'un utilisateur, sur des terminaux distincts de celui de l'utilisateur.

L'accès à des applications interactives en ligne, telles qu'une application d'apprentissage ou encore les applications interactives de jeux en ligne, met notamment en oeuvre l'utilisation de plateformes de distribution numérique d'applications interactives, telles que des plateformes de jeux vidéo à la demande, également appelées plateformes de distribution numérique de jeux. De telles plateformes de distribution numérique d'applications interactives permettent de générer des rendus de séquence d'apprentissage ou de séquences de jeux vidéo sur des serveurs d'un fournisseur de service, tel qu'un fournisseur d'accès à Internet (FAI), et de délivrer avec une faible latence (quasi en temps réel) à un utilisateur, client de la plateforme, ces rendus sous forme de flux multimédia.

### 2. Art antérieur

Jusqu'au milieu des années 2000, la distribution d'applications interactives, telles que des jeux vidéo ou des outils d'apprentissage, se faisait majoritairement sous forme traditionnelle, par le biais de chaîne de magasins spécialisés dans la distribution de produits culturels, d'enseignes spécialisées spécifiquement dans les applications interactives, ou de la grande distribution.

Puis, poussées par l'engouement du public pour Internet et l'achat en ligne, certaines enseignes se sont mises à proposer en ligne le téléchargement d'applications interactives telles que des jeux vidéo attractifs ou des outils d'apprentissage interactif.

Désormais, la distribution numérique d'applications interactives est installée dans le paysage vidéoludique, et se démocratise notamment avec des plateformes telles que Sony Playstation Now^{Ⓡ} permettant aux utilisateurs de tester un jeu vidéo en utilisant un mode de diffusion en continu (« *streaming* » en anglais) sans téléchargement, OnLive^{Ⓡ} système de jeu faisant appel à des infrastructures dites de « *cloud computing* » (informatique en nuage consistant à utiliser la puissance de calcul et/ou de stockage de serveurs informatiques distants à travers un réseau, généralement Internet, ou encore Orange Game on Demand^{Ⓡ} proposé par le fournisseur d'accès Internet Orange^{®}.

De telles plateformes de diffusion numérique d'applications interactives telles que des jeux délivrent donc, sur requête de l'utilisateur qui y a accès, des flux multimédia. Pour diffuser ces flux, des protocoles de communication spécifiques à chaque plateforme de jeu à la demande sont mis en oeuvre.

La mise en oeuvre de telles couches protocolaires spécifiques requiert une part importante de la bande passante de la connexion Internet de la plateforme de distribution numérique d'applications interactives vers l'utilisateur client de cette plateforme.

Afin de partager leur expérience ludique, les joueurs qui exécutent des jeux ou qui sont en séance d'apprentissage dans leur environnement domestique souhaiteraient diffuser en direct leur séquence de jeu ou d'apprentissage vers les terminaux d'autres utilisateurs, ou encore vers d'autres plateformes de services spécialisés tel que Twitch^{Ⓡ}, UStream^{®} ou encore Dailymotion^{®}.

Cependant, de telles diffusions d'un utilisateur vers des dispositifs ou plateformes de restitution externes sont très consommatrices en termes de bande passante de la liaison Internet, dite « montante » entre l'utilisateur (client de la plateforme de jeu à la demande) et son fournisseur d'accès, liaison qui en outre peut être perturbée par des usages concurrents effectués sur cette même liaison.

En outre, à l'heure actuelle, il est à noter que les protocoles utilisés par les terminaux d'autres utilisateurs, ou encore par d'autres plateformes de services spécialisés tel que Twitch^{Ⓡ}, UStream^{®} ou encore Dailymotion^{®} diffèrent des protocoles spécifiques mis en oeuvre par les plateformes de distribution numérique d'applications interactives telles que des plateformes de jeux à la demande, voire sont incompatibles en termes de débit ou du fait de limitations techniques du terminal de l'utilisateur.

Un utilisateur pourrait tenter de réaliser une adaptation protocolaire mais cela au prix d'un traitement complexe, chronophage (non compatible avec la diffusion en temps réelle souhaitée) et coûteux en termes de ressources requises ce qui s'avère contraire à l'usage même d'une plateforme de distribution d'applications interactive à la demande qui répond aux besoins d'utilisateurs dont le matériel est souvent limité en terme de puissance.

En outre, quand bien même l'utilisateur passerait ces difficultés, la connexion Internet de l'utilisateur ne permet pas actuellement de réaliser correctement la transmission d'un premier flux multimédia de la plateforme distribution numérique d'applications interactives vers l'utilisateur d'une part, et d'autre part la diffusion d'un deuxième flux multimédia correspondant à des séquences d'exécution d'application interactive de l'utilisateur (dites séquences interactives par la suite) vers des dispositifs de restitution externes (tels que les terminaux d'autres utilisateurs, ou encore par d'autres plateformes de services spécialisés tel que Twitch^{Ⓡ}, UStream^{®} ou encore Dailymotion^{®}). En effet, ces deux types de flux multimédia seraient en concurrence pour se partager la bande passante de la connexion Internet de l'utilisateur, ce qui aboutirait à une dégradation de leur qualité de restitution.

Ainsi, il existe donc un besoin de fournir une solution qui puisse à la fois assurer une diffusion de flux multimédia, correspondant à des séquences d'applications interactives (dites séquences interactives par la suite) de l'utilisateur, vers des dispositifs de restitution externes tout en préservant un bon accès de l'utilisateur à son réseau.

### 3. Exposé de l'invention

L'invention propose une solution nouvelle pour une diffusion alternative de flux multimédia vers des dispositifs de restitution tout en préservant un bon accès de l'utilisateur à son réseau.

Plus précisément, l'invention propose un procédé de traitement de flux multimédia entre une plateforme de distribution numérique d'applications interactives et un terminal client, connectés au travers d'un réseau de communication et communiquant entre eux selon un premier protocole de communication, comprenant les étapes suivantes, mises en oeuvre par un dispositif intermédiaire distinct du terminal client :
- modification d'un flux multimédia conforme au premier protocole de communication, obtenu à partir d'un flux multimédia transmis de la plateforme de distribution numérique d'applications interactives au terminal client, générant au moins un flux multimédia modifié conforme à au moins un deuxième protocole de communication, ledit au moins un deuxième protocole de communication étant distinct dudit premier protocole de communication,
- transmission dudit au moins un flux multimédia modifié à au moins un dispositif de restitution en utilisant ledit au moins un deuxième protocole de communication.

L'invention propose ainsi d'améliorer les techniques de restitution de flux multimédia correspondant à des séquences d'applications interactives de l'utilisateur vers des dispositifs de restitution.

En effet, l'invention propose de préserver la bande passante de la connexion Internet de l'utilisateur en « captant », au moyen d'un dispositif intermédiaire, un flux multimédia représentatif du flux multimédia transmis par la plateforme de distribution numérique d'applications interactives (par exemple une plateforme de jeux à la demande) au terminal client, ce flux multimédia étant conforme à un premier protocole de communication régissant les échanges entre ces deux entités.

Une fois capté, ce flux multimédia est traité indépendamment par le dispositif intermédiaire afin d'être modifié pour produire un flux multimédia modifié compatible avec un deuxième protocole de communication requis par le dispositif de restitution ciblé par l'utilisateur, ce deuxième protocole de communication étant distinct du premier protocole de communication mis en oeuvre entre la plateforme de distribution numérique d'applications interactive et le terminal client.

La présente invention permet donc un « déport » de la diffusion des séquences interactives, par exemple de jeu ou d'apprentissage, d'un utilisateur, celle-ci étant effectuée par le dispositif intermédiaire selon l'invention et non par le terminal client de l'utilisateur, ce qui permet de préserver la bande passante de la liaison Internet de l'utilisateur, celle-ci n'étant pas utilisée pour diffuser les séquences interactives de l'utilisateur vers d'autres dispositifs de restitution.

Ainsi, les échanges classiques entre la plateforme de distribution numérique d'applications interactives et le terminal client restent inchangés et conformes à un premier protocole de communication, tandis que le dispositif intermédiaire selon l'invention diffuse de manière indépendante et quasiment en temps réel (un léger délai étant dû à l'étape de modification du flux multimédia reçu de sorte à le rendre conforme aux protocoles de communication mis en oeuvre par les dispositifs de restitution cibles) les séquences interactives de l'utilisateur sur des dispositifs de restitution requérant des deuxièmes protocoles de communications distincts du premier protocole de communication.

Il est à noter que par dispositifs de restitution, on entend des dispositifs qui peuvent correspondre à des dispositifs à la fois distincts de la plateforme de distribution numérique d'applications interactives, du terminal client et du dispositif intermédiaire mettant en oeuvre le procédé selon l'invention. Par exemple, il s'agit de terminaux d'autres utilisateurs ou des plateforme de service spécialisées telles que Twitch, UStream, ou Dailymotion proposant une restitution selon un protocole de communication prédéterminé qui est distinct du protocole de communication utilisé spécifiquement entre la plateforme de distribution numérique d'applications interactives, par exemple une plateforme de jeu à la demande, et le terminal client.

De tels dispositifs de restitution peuvent également correspondre au terminal client, si celui-ci souhaite par exemple diffuser sa séquence de jeu sur deux fenêtres graphiques distinctes en utilisant respectivement deux protocoles de communication distincts. Ces deux fenêtres graphiques peuvent par exemple correspondre au cas d'un écran relié par un câble dvi à un autre dispositif de restitution également pourvu d'un écran, par exemple un ordinateur portable.

Selon une caractéristique particulière de l'invention, le procédé de traitement comprend une étape de duplication, par la plateforme de distribution numérique d'applications interactives, dudit flux multimédia transmis au terminal client, délivrant ledit flux multimédia conforme au premier protocole de communication, dit flux multimédia dupliqué, ledit flux multimédia dupliqué étant transmis de la plateforme de distribution numérique d'applications interactives au dispositif intermédiaire.

Ainsi, selon ce cas particulier, la plateforme de distribution numérique d'applications interactives envoie classiquement au terminal client le flux multimédia qu'elle lui destinait et envoie également une copie de ce flux multimédia, appelée flux multimédia dupliqué, au dispositif intermédiaire précédemment cité.

En d'autres termes, selon cette caractéristique particulière, la plateforme de distribution numérique d'applications interactives transmet deux flux multimédia identiques et conformes au premier protocole de communication utilisé pour les communications entre la plateforme de distribution numérique d'applications interactives et le terminal client, ces deux flux multimédia étant respectivement destinés au terminal client d'une part et au dispositif intermédiaire d'autre part.

Selon une autre caractéristique particulière de l'invention, le procédé de traitement comprend une étape de duplication, par le dispositif intermédiaire du flux multimédia transmis au terminal client, délivrant ledit flux multimédia conforme au premier protocole de communication, dit flux multimédia dupliqué, le flux multimédia étant reçu par le dispositif intermédiaire en provenance de la plateforme de distribution numérique d'applications interactives avant d'être retransmis vers le terminal client.

Ainsi, dans ce cas alternatif du cas précédant, le dispositif intermédiaire reçoit le flux multimédia destiné au terminal client, le duplique afin de traiter le flux multimédia résultant de la duplication, dit flux multimédia dupliqué, et retransmet le flux reçu au terminal client.

En d'autres termes, le dispositif intermédiaire intercepte le flux multimédia transmis par la plateforme de distribution numérique d'applications interactives au terminal client, le duplique, puis le réémet au terminal client.

Selon une caractéristique optionnelle de l'invention, le procédé de traitement comprend une étape préalable de réception d'une information représentative d'une autorisation de duplication dudit flux multimédia transmis au terminal client, émise par une entité appartenant au groupe comprenant :
- ledit terminal client,
- ladite plateforme de distribution numérique d'applications interactives,
- un fournisseur d'accès audit réseau de communication.

En effet, l'utilisateur client choisit ou non d'utiliser ce procédé de diffusion alternatif à d'autres dispositifs de restitution. Pour indiquer ce choix, le terminal client envoie son accord directement au dispositif intermédiaire, ou à la plateforme de distribution numérique d'applications interactives qui renvoie ensuite cet accord au dispositif intermédiaire, ou souscrit un service auprès de son fournisseur d'accès pour que celui-ci autorise la duplication du flux multimédia relatif à ses séquences de jeu par la plateforme de distribution numérique d'applications interactives ou le dispositif intermédiaire.

Selon une caractéristique particulière de l'invention, ladite étape de modification comprend au moins une étape de mémorisation d'une information représentative dudit au moins un deuxième protocole de communication.

En effet, le ou les protocole(s) de communication requis par les dispositifs de restitution sont selon une première alternative connus par défaut du dispositif intermédiaire mettant en oeuvre la présente invention par exemple dans le cas où l'utilisateur client désire restituer ses séquences interactives à chaque fois sur le même dispositif ou plateforme de restitution.

Toutefois, selon le mode de réalisation relatif à cette caractéristique particulière de l'invention, l'utilisateur client ou le(s) dispositif(s) de restitution cible(s) peuvent échanger avec le dispositif intermédiaire selon l'invention afin de l'informer de manière dynamique du protocole de communication qu'il doit prendre en compte pour adapter le flux multimédia qu'il reçoit afin de retransmettre un ou plusieurs flux multimédia chacun compatibles avec le ou les dispositifs de restitution cible(s).

Pour ce faire, le dispositif intermédiaire selon l'invention reçoit et mémorise dans ce cas par exemple un identifiant du protocole de communication utilisé par ce dispositif de restitution. Selon un autre exemple, le dispositif intermédiaire selon l'invention reçoit et mémorise une information identifiant le dispositif de restitution cible et en déduit au vu de sa nature le protocole de communication utilisé par ce dispositif de restitution cible qu'il doit prendre en compte pour modifier le flux multimédia qu'il a « capté » entre la plateforme de distribution numérique d'applications interactives et le terminal client.

Selon une caractéristique particulière de l'invention, ladite étape de modification comprend une étape de désencapsulation dudit flux multimédia conforme au premier protocole de communication délivrant des paquets de données désencapsulés et une étape d'encapsulation selon ledit au moins un deuxième protocole de communication, ledit au moins un flux multimédia modifié étant généré à partir de ladite encapsulation (136) desdits paquets de données désencapsulés.

L'encapsulation, en informatique et spécifiquement pour les réseaux informatiques, est un procédé consistant à inclure les données d'un protocole dans un autre protocole.

Par exemple, l'Internet est basé sur l'Internet Protocol (IP) Version 4 et la plupart des applications utilisent aussi bien l'UDP (de l'anglais pour « *User Datagram Protocol »)* que le TCP (de l'anglais pour « *Transmission Control Protocol* »)*.* Ainsi un fragment de donnée est encapsulé dans un datagramme UDP qui lui-même est encapsulé dans un paquet IP, ce dernier étant alors envoyé via un protocole de la couche de liaison (par exemple Ethernet). La couche de liaison est responsable de la transmission physique des données, l'Internet Protocol ajoute l'adressage des ordinateurs individuels, l'UDP ajoute « l'adressage des applications » (c'est-à-dire le port spécifiant le service comme, par exemple, un service web ou un serveur TFTP).

La désencapsulation consiste donc à extraire les données, dites données de base, qui ont été encapsulées en utilisant le premier protocole mis en oeuvre entre la plateforme de distribution numériques d'applications interactives et le terminal client.

Ainsi, le dispositif intermédiaire sélectionne au sein du flux multimédia qu'il capte entre la plateforme de distribution numérique d'applications interactives et le terminal client les données qu'il va modifier, ce qui permet de limiter la complexité et la durée de la modification qu'il met en oeuvre.

Selon une caractéristique particulière de l'invention, ladite étape de modification comprend en outre une étape de décodage selon un premier format de codage des paquets de données désencapsulés, délivrant des données décodées, et une étape de codage selon un deuxième format de codage, distinct du premier format de codage, desdites données décodées, délivrant des données encodées destinées à être encapsulées lors de ladite étape d'encapsulation.

En particulier, ladite étape de modification comprend en outre une sélection d'au moins un paramètre de codage à appliquer lors dudit codage des données décodées, ledit au moins un paramètre de codage appartenant au groupe de paramètres suivants:
- format de codage,
- résolution appliquée auxdites données vidéo,
- débit.

Par exemple, pour des données vidéo, le format de codage correspond par exemple à un codage selon la norme H.264, la résolution correspond à des résolutions de 320 x 240 pixels, 480 x 360 pixels, 720 x 483 pixels, 1280 x 720 pixels, 1920 x 1080 pixels, et les débits correspondent par exemple à des débits de 500kbps, 800kbps, 1200kbps, 2500 kbps et 3500 kbps.

Par exemple, pour des données audio le format de codage correspond par exemple aux codages MP3 ou AAC, le débit correspond par exemple aux débits 128 ou 160 kbps.

Selon une caractéristique optionnelle de l'invention, ladite étape de modification comprend en outre une étape de démutiplexage des paquets de données désencapsulés, délivrant des données démultiplexées destinées à être décodées lors de l'étape de décodage, et/ou une étape de multiplexage des données encodées selon le deuxième format de codage, délivrant les données multiplexées destinées à être encapsulées lors de l'étape d'encapsulation.

Un tel démultiplexage permet une adaptation indépendante des données audio et vidéo afin de générer un flux multimédia modifié compatible à la fois du point de vue audio et du point de vue vidéo avec le dispositif de restitution cible.

Selon un autre aspect, la technique proposée se rapporte également à un dispositif intermédiaire de traitement de flux multimédia, apte à être utilisé entre une plateforme de distribution numérique d'applications interactives et un terminal client connectés au travers d'un réseau de communication et communiquant entre eux selon un premier protocole de communication, ledit dispositif intermédiaire comprenant :
- un module de modification d'un flux multimédia conforme au premier protocole de communication, obtenu à partir d'un flux multimédia transmis de la plateforme de distribution numérique d'applications interactives au terminal client, générant au moins un flux multimédia modifié conforme à au moins un deuxième protocole de communication, ledit au moins un deuxième protocole de communication étant distinct dudit premier protocole de communication,
- un module de transmission dudit au moins un flux multimédia modifié à au moins un dispositif de restitution en utilisant ledit au moins un deuxième protocole de communication.

Un tel dispositif intermédiaire, agit comme un « relais » des séquences interactives de l'utilisateur afin de les diffuser sur un canal qui lui est propre (entre lui-même et l'un des dispositifs de restitution cible) et est notamment adapté à mettre en oeuvre le procédé de traitement de flux multimédia décrit précédemment.

Selon une caractéristique particulière, le dispositif intermédiaire de traitement de flux multimédia selon l'invention comprend en outre un module de duplication, du flux multimédia transmis au terminal client, délivrant ledit flux multimédia conforme au premier protocole de communication, dit flux multimédia dupliqué, ledit module de duplication recevant ledit flux multimédia transmis au terminal client par ladite plateforme de distribution numérique d'applications interactives, et retransmettant, après duplication, ledit flux multimédia audit terminal client.

Ce dispositif intermédiaire pourra bien sûr comporter également les autres différentes caractéristiques relatives au procédé de traitement de flux multimédia selon l'invention, qui peuvent être combinées ou prises isolément. Ainsi, les caractéristiques et avantages de ce dispositif sont les mêmes que ceux du procédé de traitement de flux multimédia. Par conséquent, ils ne sont pas détaillés plus amplement.

Selon un autre aspect, la technique proposée se rapporte également à un système de traitement de flux multimédia comprenant une plateforme de distribution numérique d'applications interactives et un terminal client, connectés au travers d'un réseau de communication et communiquant entre eux selon un premier protocole de communication, ladite plateforme de distribution numérique d'applications interactives transmettant audit terminal client un flux multimédia conforme audit premier protocole, ledit système comprenant un dispositif intermédiaire tel que décrit précédemment, et en la plateforme de distribution numérique d'applications interactives comprend un module de duplication dudit flux multimédia transmis par ladite plateforme au terminal client, délivrant un flux multimédia, conforme au premier protocole de communication, et destiné à être transmis audit dispositif intermédiaire.

Selon une implémentation préférée, les différentes étapes du procédé de traitement de flux multimédia selon l'invention sont mises en oeuvre par un ou plusieurs logiciels ou programmes d'ordinateur, comprenant des instructions logicielles destinées à être exécutées par un processeur de données d'un dispositif intermédiaire selon l'invention et étant conçues pour commander l'exécution des différentes étapes du procédé.

En conséquence, l'invention vise aussi un programme, susceptible d'être exécuté par un ordinateur ou par un processeur de données, ce programme comportant des instructions pour commander l'exécution des étapes d'un procédé de traitement de flux multimédia tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique (clé USB, SSD), ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels.

Les différents modes de réalisation mentionnés ci-dessus sont combinables entre eux pour la mise en oeuvre de l'invention.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 présente les principales étapes mises en oeuvre par un procédé de traitement de flux multimédia selon un mode de réalisation de l'invention ;
- la figure 2 illustre un exemple d'encapsulation mis en oeuvre par le premier protocole de communication;
- les figures 3 et 4 illustrent deux exemples de réseaux utilisant l'invention ; et
- la figure 5 présente la structure simplifiée d'un dispositif intermédiaire selon un mode de réalisation particulier de l'invention.

### 5. Description d'un mode de réalisation de l'invention

### 5.1 Principe général

Le principe général de l'invention repose sur l'utilisation d'un dispositif intermédiaire entre une plateforme de distribution numérique d'applications interactives (par exemple une plateforme de jeu à la demande), et un terminal utilisateur, (dit terminal client), permettant de modifier des séquences interactives d'un utilisateur, reçues au sein du dispositif intermédiaire selon un premier protocole de communication propre aux échanges entre la plateforme de distribution numérique d'applications interactives et le terminal client, puis de les diriger sur un chemin de communication particulier entre ce dispositif intermédiaire et au moins un dispositif de restitution requérant un deuxième protocole de communication distinct du premier protocole de communication.

En d'autres termes, la solution proposée se base sur un système qui duplique les flux multimédia issus des plateformes de distribution numérique d'applications interactives, les adapte en terme de protocole et les diffuse vers des plateformes de services spécialisées ou d'autres dispositifs/modules de restitution requérant un deuxième protocole de communication.

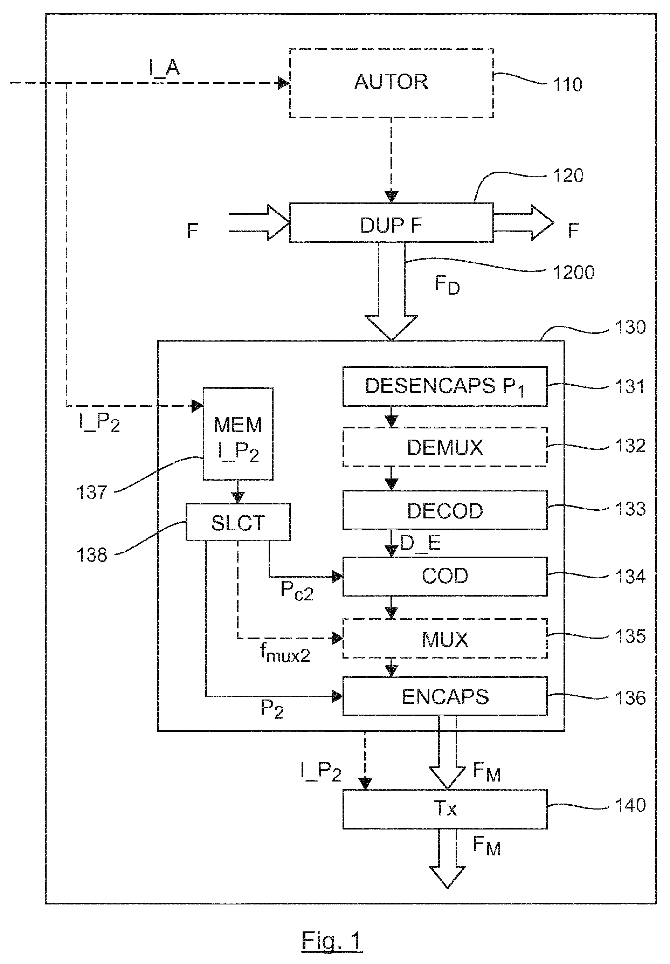

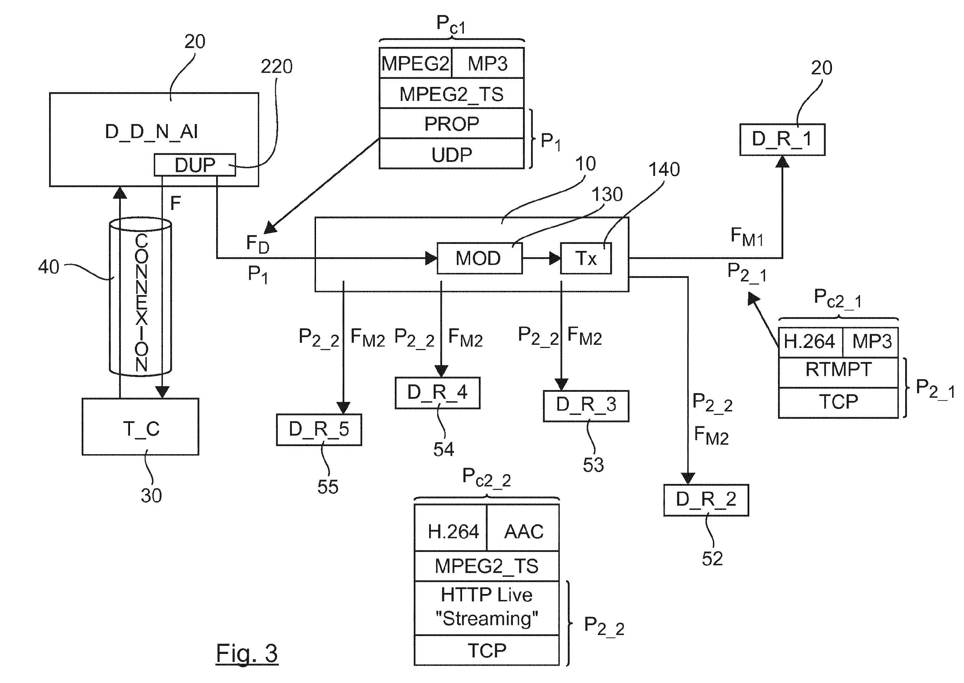

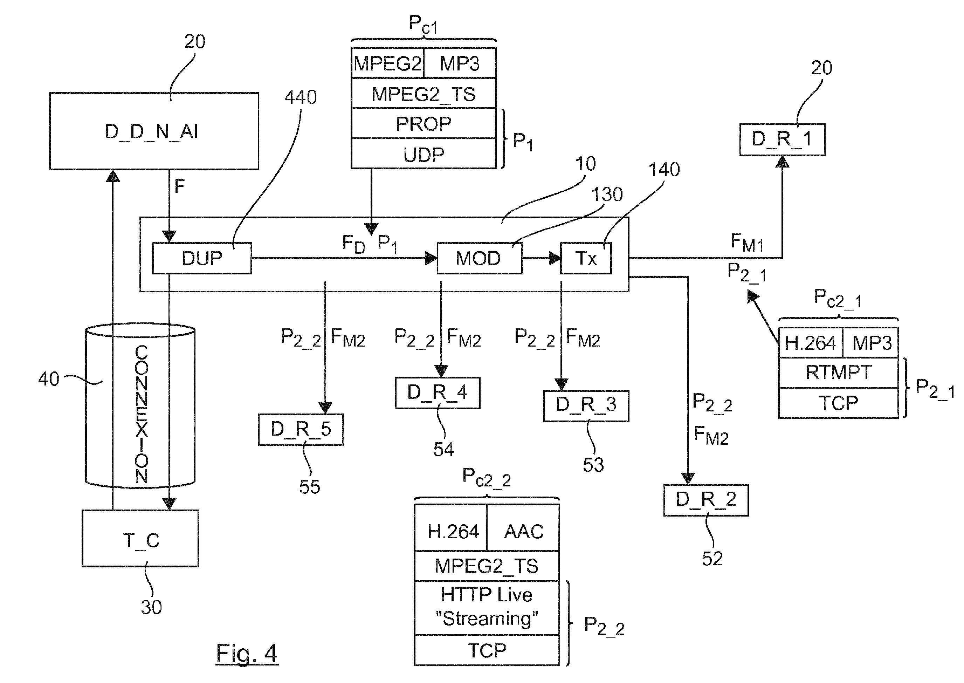

On présente tout d'abord, en relation avec la figure 1, les principales étapes mises en oeuvre par un dispositif intermédiaire 10 entre une plateforme de distribution numérique d'applications interactives 20 et un terminal client 30 tels que représentés en relation avec les figures 3 ou 4 décrites ci-après, pour transmettre des séquences interactives d'un utilisateur à un ou plusieurs dispositif(s) de restitution (parmi les dispositifs de restitution 51 à 55 représentés sur la figure 3) de telles séquences interactives étant transmises par le dispositif intermédiaire 10 selon un protocole de communication, requis par le dispositif de restitution, et distinct du protocole de communication régissant les échanges entre la plateforme de distribution numérique d'applications interactives 20 et le terminal client 30.

Pour cela, le dispositif intermédiaire 10 obtient (étape 1200) tout d'abord un flux multimédia F_{D} conforme à un premier protocole de communication P₁ propre aux échanges entre la plateforme de distribution numérique d'applications interactives 20 et le terminal client 30.

En particulier, le flux multimédia F_{D} est obtenu par duplication (étape 120) du flux multimédia F transmis en temps réel de la plateforme de distribution numérique d'applications interactives 20 au terminal client 30.

De telles plateformes de distribution numérique d'applications interactives permettent de générer des rendus de séquence d'apprentissage ou de séquences de jeux vidéo, suite à une action de l'utilisateur (par exemple la saisie de réponse, un déplacement d'un personnage de jeu ou d'un avatar via un mouvement de pointeur correspondant par exemple à une souris d'ordinateur...) sur des serveurs d'un fournisseur de service, tel qu'un fournisseur d'accès à Internet (FAI), et de délivrer avec une faible latence (quasi en temps réel) à un utilisateur, client de la plateforme, ces rendus sous forme de flux multimédia en utilisant la connexion Internet 40 de l'utilisateur. En d'autres termes, le dispositif intermédiaire « capte » une image (i.e. une copie) du flux multimédia qui est envoyé de la plateforme de distribution numérique d'applications interactives 20 vers le terminal client 30.

Comme illustré par la suite en relation avec les figures 3 et 4, un telle étape de duplication est mise en oeuvre soit par un module de duplication 220 de la plateforme de distribution numérique d'applications interactives 20 (cf. figure 3), soit par un module de duplication 440 du dispositif intermédiaire 10 (cf. figure 4), et délivre un flux multimédia F_{D,} dit flux multimédia délivré, conforme au premier protocole de communication P₁.

Une telle duplication (étape 120) est autorisée par défaut ou optionnellement (représenté en pointillés) au préalable par l'utilisateur du terminal client 30 qui émet une requête de diffusion de ses séquences interactives au moyen du dispositif intermédiaire 10 selon l'invention.

Pour ce faire, lorsqu'une telle diffusion n'est pas autorisée par défaut, le dispositif intermédiaire 10 met en oeuvre une étape optionnelle (représentée en pointillés) préalable de réception (étape 110) d'une information I_A représentative d'une autorisation de réception d'un flux multimédia, cette requête étant émise par une entité appartenant au groupe comprenant :
- ledit terminal client,
- ladite plateforme de distribution numérique d'applications interactives,
- un fournisseur d'accès audit réseau de communication.

En particulier, ladite information représentative d'une autorisation de réception correspond par exemple à :
- un identifiant (par exemple une adresse IP) spécifiquement alloué audit dispositif intermédiaire 10 dans ledit réseau de communication (en d'autres termes, dans ce cas, le dispositif intermédiaire 10 est visible dans le réseau), ou
- une autorisation d'utilisation virtuelle d'un identifiant alloué (par exemple une adresse IP) au terminal de client 30, (dans ce cas, le dispositif intermédiaire 10 est « transparent » dans le réseau, comme une machine virtuelle dédiée à la diffusion alternative de séquences interactive de l'utilisateur vers d'autres dispositifs de restitution).

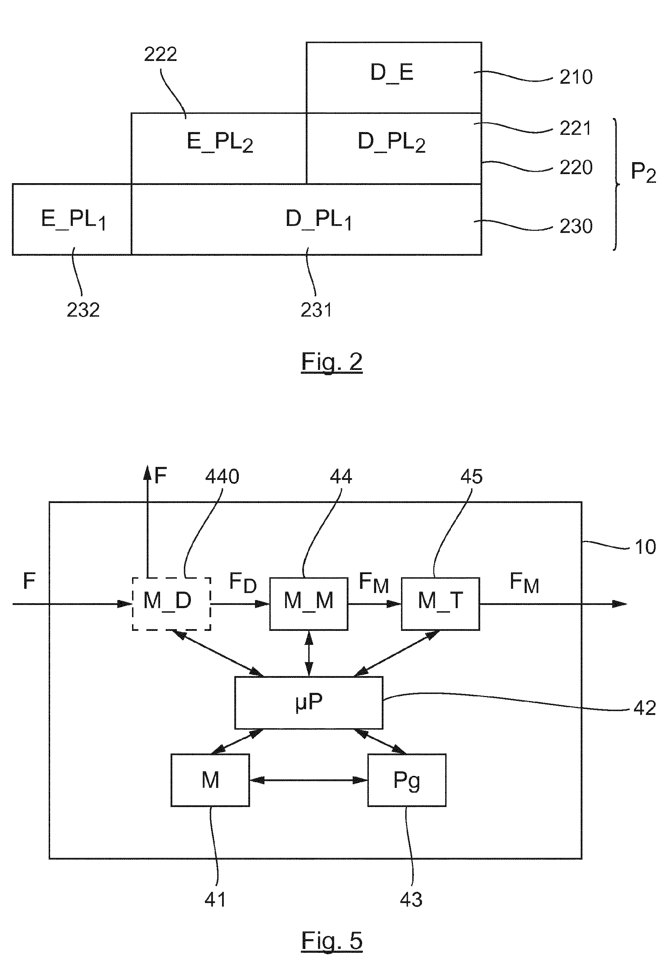

Une fois qu'un flux multimédia dupliqué F_{D} est obtenu par le dispositif intermédiaire 10, ce flux multimédia dupliqué F_{D} peut être stocké temporairement dans une mémoire 41 du dispositif intermédiaire, comme illustré plus loin en relation avec la figure 5, afin d'être modifié (étape 130).

En effet, le flux multimédia dupliqué F_{D} est conforme à un premier protocole P₁ de communication régissant les échanges entre la plateforme de distribution numérique d'applications interactives 20 et le terminal client 30. Un tel protocole P₁ est par exemple un protocole UDP, ou une suite protocolaire où les données échangées sont encapsulées au moyen du protocole UDP au niveau de la couche de transport, mettant ainsi en oeuvre une étape d'encapsulation.

Une telle encapsulation mise en oeuvre par la plateforme de distribution numérique d'applications interactives 20, consiste à traiter des données D_E à transmettre, éventuellement encodées et multiplexées au préalable.

En particulier, ces données sont traitées selon une couche protocolaire de transport délivrant un fragment de données, dites données D_UDP, encapsulé dans un datagramme UDP comprenant en outre un en-tête UDP.

La modification du flux dupliqué F_{D} comprend alors une étape de désencapsulation (étape 231) consistant à extraire les paquets de données (codées et/ou multiplexées) qui ont été auparavant encapsulés en utilisant le premier protocole P₁ mis en oeuvre entre la plateforme de distribution numériques d'applications interactives et le terminal client.

Une fois ces données obtenues, l'étape de modification (130) peut optionnellement (notamment lorsqu'un multiplexage a été mis en oeuvre par la plateforme de distribution numérique d'applications interactives 20) mettre en oeuvre un démultiplexage (étape 132) délivrant des données vidéo et/ou audio démultiplexées pouvant être traitées indépendamment afin de délivrer un flux multimédia modifié F_{M} conforme aux besoins dispositif de restitution identifié par l'utilisateur du terminal client 30.

Après le démultiplexage (étape 132) optionnel, l'étape de modification (130) comprend une étape de décodage (133), selon un premier format de codage f_{c1}, des paquets de données désencapsulés délivrant des données décodées D_E.

En parallèle, une information I_P₂ représentative d'un deuxième protocole P₂ de communication requis par un dispositif de restitution identifié par l'utilisateur du terminal client 30 est mémorisée (étape 137) dans la mémoire 41, lorsque le dispositif intermédiaire 10 n'en dispose pas par défaut.

Une telle information I_P₂ peut correspondre à l'identifiant de ce deuxième protocole P₂ en tant que tel. Une telle information I_P₂ peut également correspondre à l'identifiant du dispositif de restitution désigné par l'utilisateur du terminal client 30.

Selon une première variante de réalisation, il est possible que le dispositif intermédiaire 10 dispose, au sein de la mémoire 41, d'une table ou d'un fichier permettant de déterminer le protocole de communication requis par le dispositif de restitution correspondant à cet identifiant, ce protocole de communication étant ensuite pris en compte lors des étapes de codage (134), optionnellement de multiplexage (135) et d'encapsulation (136) de l'étape de modification 130 pour adapter le flux multimédia dupliqué F_{D} afin de le rendre compatible avec le deuxième protocole de communication (P₂) du dispositif de restitution requis par l'utilisateur.

Il est notamment possible qu'une telle information I_P₂ représentative du deuxième protocole de communication soit reçue conjointement à l'information I_A représentative d'une autorisation de duplication du flux multimédia reçu par ledit dispositif intermédiaire.

Il est à noter que la présente invention peut permettre avantageusement de rediffuser à partir du dispositif intermédiaire les séquences interactives de l'utilisateur sur plusieurs dispositifs de restitution distincts, et que dans ce cas pour chaque dispositif de restitution identifié par l'utilisateur, le dispositif intermédiaire mémorise (étape 137) autant d'informations représentatives de protocoles de communication qu'il n'y a de dispositifs de restitution désignés par l'utilisateur.

A partir de cette information I_P₂ représentative du deuxième protocole de communication P₂, l'étape de modification 130 comprend en outre une sélection (étape 138) d'au moins un paramètre de codage P_{c2} à appliquer lors du codage (134) des données décodées D_E, ledit au moins un paramètre de codage appartenant au groupe de paramètres suivants:
- format de codage f_{c2} (MPEG, AAC, MP3)
- résolution appliquée auxdites données vidéo,
- débit.

La sélection (étape 138) du paramètre de codage Pc peut être dynamique (i.e. varier en fonction du temps et des besoins de restitution de l'utilisateur du terminal client 30). Le dispositif intermédiaire est donc reconfigurable, car apte à adapter la modification appliquée au flux dupliqué F_{D}.

Par exemple, à certains moments de la journée l'utilisateur client peut souhaiter diffuser ses propres séquences interactives sur une plateforme de services spécialisés telle que tel que Twitch^{Ⓡ}, UStream^{®} ou encore Dailymotion^{®}, en utilisant le protocole RTMP (de l'anglais « *Real Time Messaging Protocol »)* (ou RTMPT (de l'anglais « *Real Time Messaging Protocol Tunneled»)* où les données RTMP sont en outre encapsulée en utilisant le protocole http (de l'anglais « *Hypertext Transfer Protocol* »)) fonctionnant lui-même en utilisant le protocole TCP (de l'anglais « *Transmission Control Protocol »).*

Puis, à d'autres moments de la journée, correspondant par exemple aux moments de présence à leur domicile d'amis de l'utilisateur, ou de membres d'une communauté interactive auquel participe l'utilisateur, l'utilisateur client peut souhaiter diffuser ses propres séquences interactives directement sur les dispositifs de restitution de ces personnes en utilisant plutôt le protocole HLS (de l'anglais « *Http Live Streaming »).*

La prise en compte de tels paramètres de codage P_{c2} lors du codage (134) des données D_E délivre des données encodées. Ces données encodées sont optionnellement multiplexées (étape 135) en tenant compte d'un format de multiplexage fₘᵤₓ₂, par exemple MPEG2-TS, sélectionné (étape 138) à partir de l'information I_P₂ représentative du deuxième protocole de communication.

Puis ces données encodées (voire multiplexées) sont encapsulées (étape 136) conformément au deuxième protocole de communication P₂.

La figure 2 illustre plus particulièrement une exemple d'encapsulation (136) mis en oeuvre selon l'invention.

Selon cet exemple, l'encapsulation des données selon le deuxième protocole P₂ comprend deux niveaux d'encapsulation (ou couches protocolaires) PL₁ et PL₂.

Les données D_E 210 à transmettre par le dispositif intermédiaire 10, éventuellement encodées (étape 134) et multiplexées (étape 135) au préalable, sont donc en premier lieu encapsulées selon une première couche (220) protocolaire PL₂ d'application (i.e. au niveau de la couche applicative, par exemple un protocole propriétaire de la plateforme 20 ou les protocoles « http live streaming » ou encore RTMPT) délivrant un fragment de données D_PL₂ (221), et un en-tête E_PL₂ 222.

Puis, le produit (220) de cette première encapsulation est lui-même encapsulé selon une deuxième couche (230) protocolaire de transport (par exemple TCP) délivrant un fragment de données, dites données D_PL₁ (231) et un en-tête E_ PL₁ (232).

A l'issue de l'encapsulation (136), l'étape de modification (130) délivre un flux multimédia modifié F_{M} compatible avec le deuxième protocole de communication P₂ mis en oeuvre par le dispositif de restitution identifié par l'utilisateur du terminal client 30 au moyen de l'information représentative I_P₂.

Un tel flux multimédia modifié F_{M} est ensuite transmis (étape 140), par le dispositif intermédiaire 10, vers le(s) dispositif(s) de restitution identifié(s) par l'utilisateur. En particulier, lorsque plusieurs dispositifs de restitution sont identifiés par l'utilisateur du terminal client 30, des paramètres de codage et des protocoles de communication spécifiques à chaque dispositif de restitution peuvent être utilisés par le dispositif intermédiaire 10 lors de la modification du flux dupliqué F_{M}, avant la transmission de flux multimédias modifiés F_{M1}, F_{M2}... respectifs, obtenus à l'issue de cette étape de modification, vers ces différents dispositifs de restitution.

Il est à noter que le module de transmission 45 du dispositif intermédiaire 10, comme illustré plus loin en relation avec la figure 5, utilise l'information I_P₂ représentative du deuxième protocole P₂ précédemment mémorisée (étape 137), lorsqu'il n'en dispose pas par défaut.

Les tableaux ci-après illustrent un exemple de paramètres de codage du flux multimédia dupliqué F_{D} au regard de paramètres de codage du flux multimédia modifié F_{M} délivré par le dispositif intermédiaire 10 (ici avec un même format de codage vidéo, mais une résolution et un débit variant selon le dispositif de restitution considéré) :

| Caractéristiques du flux multimédia reçu F_{R} avant traitement par le dispositif 10 | | | |
|---|---|---|---|
| | Vidéo : codage MPEG2 | | Audio : codage MP3 |
| | Définition standard SD | Haute définition HD | |
| Résolution (pixels) | 768x576 | 1920x1080 | N/A |
| Débit (kbps) | 2900 | 11000 | 192 |

| Caractéristiques du flux multimédia reçu F_{M} après traitement par le dispositif 10 | | | | | | | |
|---|---|---|---|---|---|---|---|
| | Vidéo : codage H.264 | | | | | Audio codage MP3 | Audio codage AAC |
| Profil | D_R_1 | D_R_1 | D_R_1 | D_R_4 | D_R_5 | | |
| Résolution (pixels) | 320x240 | 480x360 | 720x480 | 1280x720 | 1920x1080 | N/A | N/A |
| Débit (kbps) | 500 | 800 | 1200 | 2500 | 3500 | 128 | 160 |

### 5.2 Exemple détaillé de mise en oeuvre

On présente ci-après, en relation avec la **figure 3****,** un premier exemple détaillé de système de communication utilisant l'invention, selon lequel la plateforme de distribution numérique d'applications interactives 20 correspond à une plateforme de jeu à la demande.

Plus précisément, la figure 3 représente la mise en oeuvre de l'invention pour la transmission d'un flux multimédia correspondant à des séquences de jeux d'un utilisateur vers des dispositifs de restitution (51 à 55). De tels dispositifs de restitution sont distincts d'une plateforme de jeux à la demande 20 et d'un module d'un terminal client 30 communiquant tous deux selon un premier protocole de communication P₁ via une connexion internet 40 filaire (ADSL) ou non filaire (Wi-Fi) selon le terminal client.

Le protocole met en oeuvre par exemple une encapsulation à deux niveaux telle qu'illustrée précédemment en relation avec la figure 2.

Selon l'exemple représenté sur la figure 3, la première couche protocolaire applicative correspond à un protocole propriétaire de la plateforme 20, tandis que la deuxième couche protocolaire de transport correspond au protocole UDP.

En outre, les dispositifs de restitution (51 à 55) mettent respectivement en oeuvre un protocole de communication qui leur est spécifique, différent du protocole de communication P₁ mis en oeuvre entre la plateforme de jeu à la demande 20 et le terminal client 30. A titre d'exemple sur la figure 3, le dispositif 51 de restitution (typiquement une plateforme de services spécialisées) utilise un protocole de communication P_{2_1} (comprenant une couche protocolaire applicative correspondant au protocole RTMPT, tandis que la deuxième couche protocolaire de transport correspond au protocole TCP), tandis que les dispositifs 52 à 55 de restitution (par exemple des terminaux individuels de spectateurs) utilisent le même protocole de communication P_{2_2} (comprenant une couche protocolaire applicative correspondant au protocole « http live streaming », tandis que la deuxième couche protocolaire de transport correspond au protocole TCP), sans que l'invention ne se limite à cette configuration particulière.

Ainsi, le réseau de communication illustré en figure 3, comprend donc au moins la plateforme de jeu à la demande 20, le terminal client 30, le dispositif intermédiaire 10 mettant en oeuvre le procédé de traitement de flux multimédia tel que décrit précédemment, et les dispositifs de restitution distincts 51 à 55.

Au regard de la figure 3, il peut être noté que le dispositif intermédiaire 10 permet de diffuser les données relatives à une séquence de jeu vidéo directement de la plateforme de jeux à la demande 20 vers un dispositif de restitution (par exemple, le dispositif 51) correspondant par exemple à une plateforme de services spécialisés telle que tel que Twitch^{Ⓡ}, UStream^{®} ou encore Dailymotion^{®}.

Ainsi, le flux multimédia F_{M1} à destination d'une telle plateforme de services spécialisés 51 ne transite pas par la connexion Internet 40 du client et donc ne rentre pas en concurrence avec le flux F du jeu vidéo lui-même sur cette connexion internet 40, dont la bande passante est ainsi préservée. De plus, l'adaptation protocolaire et vidéo effectuée lors de l'étape 130 de modification, mise en oeuvre automatiquement par le dispositif intermédiaire 10, n'est pas à la charge du terminal client 30, ce qui limite au maximum les ressources dont celui-ci a besoin pour accéder au service et permet de s'affranchir de la mise en oeuvre d'un quelconque système/procédé par lui-même.

Ainsi, selon une application particulière, la plateforme de jeux à la demande 20 peut proposer à ses clients de diffuser leur propre séquences de jeux vidéo en direct sans ajouter des contraintes en terme de connectivité, de puissance de leur terminal et sans nécessiter l'installation d'un système additionnel chez le client. En effet, selon cette application particulière, le dispositif intermédiaire 10 peut être localisé à proximité de la plateforme de jeux à la demande 20, voire intégré à cette plateforme 20, tout en étant distant du terminal client 30.

Selon l'exemple de la figure 3, la plateforme de jeux à la demande 20, sur commande du client (e.g. un joueur de jeux vidéo retournant en temps réel des commande de déplacement visant à déplacer un personnage dans le flux vidéo), envoie deux flux identiques, d'une part le flux multimédia F au terminal client 30, et d'autre part une copie F_{D} de ce flux multimédia F au dispositif intermédiaire 10.

En particulier, le flux dupliqué F_{D} transmis au dispositif intermédiaire 10 est généré à partir du flux multimédia F par un module de duplication de flux 220 mis en oeuvre au sein de la plateforme de jeux à la demande 20, implémenté (par exemple sous forme logicielle) de manière connue en soi par l'homme du métier.

La transmission de ce flux dupliqué F_{D} de la plateforme de jeu à la demande 20 au dispositif intermédiaire 10 utilise par exemple une connexion réseau point à point (« unicast » en anglais).

Au sein du dispositif intermédiaire 10, le flux dupliqué F_{D} conforme au premier protocole de communication P₁ provenant de la plateforme de jeux à la demande 20 est reçu par exemple au moyen d'un serveur proxy inverse de type Nginx, lequel se place auparavant en attente de ce type de flux.

Puis, le flux dupliqué F_{D} conforme au premier protocole de communication P₁ est alors modifié (étape 130), tel que décrit précédemment, de sorte à obtenir deux flux modifiés distincts F_{M1} et F_{M2} respectivement conformes aux deux protocoles de communication P_{2_1} et P_{2_2}.

Plus précisément, le serveur proxy inverse de type Nginx, extrait les données D_E du flux dupliqué F_{D} par désencapsulation des données des différentes couches protocolaires du protocole de communication P₁ mis en oeuvre par la plateforme de jeux à la demande 20, un tel protocole de communication P₁ correspondant par exemple à la combinaison d'un protocole applicatif (i.e. au niveau de la couche applicative, par exemple un protocole propriétaire de la plateforme 20) avec un protocole de transport (i.e. au niveau de la couche de transport, par exemple UDP ou TCP).

Une telle désencapsulation consiste à « retrouver » les données D_E 210 illustrées sur la figure 2 lorsqu'elles ont subi plusieurs encapsulations successives. Une telle désencapsulation consiste notamment à séparer, au sein de chaque « capsule » protocolaire, les données des en-têtes utilisés.

Une fois les données désencapsulées, le serveur proxy inverse de type Nginx poursuit l'étape 130 de modification du flux dupliqué F_{D} en se basant sur un fichier ou d'une table de configuration, mémorisée par défaut dans le dispositif intermédiaire 10 ou envoyé(e) par le dispositif de restitution cible à ce dispositif intermédiaire 10.

Un tel fichier ou une telle table contient respectivement les information I_P_{2_1} et I_P_{2_2} représentatives des protocoles de communication P_{2_1} et P_{2_2}, telles que décrites précédemment en relation avec le procédé de traitement de flux multimédia selon un mode de réalisation de l'invention.

Un tel fichier ou une telle table indique notamment les profils vidéo et audio à générer en sortie (en fonction du dispositif de restitution cible, par exemple RTMPT pour le dispositif de restitution 51 correspondant à une plateforme de services spécialisés, et HLS pour les dispositifs de restitution 52 à 55 correspondant à des terminaux d'autres utilisateurs que l'on peut qualifier de « spectateurs » des séquence de jeux de l'utilisateur du terminal client 30).

Au cours de cette étape 130 de modification, le serveur proxy inverse de type Nginx met par exemple en oeuvre les étapes de démultiplexage 132 (optionnelle), de décodage 133, de codage 134 et de multiplexage 135 (optionnelle) précédemment citées.

En particulier, l'étape de codage 134 utilise par exemple l'utilitaire FFmpeg pour la conversion de formats vidéo, un tel utilitaire supportant un encodage en temps réel.

Le serveur proxy inverse de type Nginx déclenche ensuite la transmission (étape 140) de flux modifiés F_{M1} et F_{M2}, obtenus à l'issue de l'étape 130 de modification, vers les dispositifs de restitution 51 à 55, désignés par l'utilisateur du terminal client 30, en utilisant les protocoles de communication P_{2_1} à P_{2_2} respectivement utilisés par ces dispositifs.

Ainsi, l'opération de modification de flux réalisée par le dispositif intermédiaire 10 génère un temps de latence faible ce qui permet, au regard de la diffusion du flux multimédia F mis en oeuvre par la plateforme de jeux à la demande 20, d'obtenir une restitution en quasi temps réel sur le dispositif de restitution 51 correspondant à une plateforme de services spécialisés utilisant un protocole RTMP.

On présente en relation avec **la** **figure 4** un autre exemple de réseau de communication dans lequel, à la différence de la figure 3, l'étape de duplication 120 est mise en oeuvre par un module de duplication 440 intégré au sein du dispositif intermédiaire 10.

Ainsi, selon cet exemple et comparé à l'exemple de la figure 3, la plateforme de jeux à la demande 20 transmet un seul flux multimédia F, en direction du terminal client 30.

Cette transmission est interceptée par le dispositif intermédiaire 10, dont le module de duplication 440 duplique alors le flux multimédia F provenant de la plateforme de jeux à la demande 20 avant de le réémettre ensuite immédiatement vers le terminal client 30, et délivre un flux multimédia dupliqué F_{D} traité par la suite au moyen des étapes de modification 130 et de transmission 140 décrites précédemment au regard de la figure 3.

### 5.3 Structure simplifiée d'un dispositif selon l'invention

On présente finalement, en relation avec **la** **figure 5****,** la structure simplifiée d'un dispositif intermédiaire 10 mettant en oeuvre un procédé de traitement de flux multimédia selon l'un des modes de réalisation décrits ci-dessus.

Comme illustré en figure 5, un dispositif intermédiaire 10 selon un mode de réalisation de l'invention comprend une mémoire 41 (par exemple sous forme de mémoire tampon) et une unité de traitement 42 (équipée par exemple d'un microprocesseur µP) pilotée par le programme d'ordinateur 43, lequel met en oeuvre le procédé de traitement de données décrit ci-dessus.

A l'initialisation, les instructions de code du programme d'ordinateur 43 sont par exemple chargées dans une mémoire RAM du dispositif 10 avant d'être exécutées par l'unité de traitement 42. L'unité de traitement 42 met en oeuvre les étapes du procédé de traitement de flux multimédia décrit précédemment, selon les instructions du programme d'ordinateur 43, pour modifier (étape 130) un flux multimédia F_{D} conforme à un premier protocole de communication P₁ mis en oeuvre entre une plateforme de distribution numérique d'applications interactives 20 et un terminal client 30, obtenu à partir d'un flux multimédia F transmis de la plateforme de distribution numérique d'applications interactives au terminal client, de sorte à générer au moins un flux multimédia modifié F_{M} conforme à au moins un deuxième protocole P₂ de communication mis en oeuvre par un (ou plusieurs) dispositif(s) de restitution cible(s) du réseau, ledit au moins un deuxième protocole de communication étant distinct dudit premier protocole de communication, et pour transmettre (étape 140) ledit au moins un flux multimédia modifié (F_{M}) à ce(s) dispositif(s) de restitution en utilisant ledit au moins un deuxième protocole (P₂) de communication.

Pour cela, le dispositif intermédiaire 10 comprend, outre la mémoire 41 et l'unité de traitement 42 :
- un module de modification (44) d'un flux multimédia (F_{D}) conforme au premier protocole de communication (P₁), obtenu à partir d'un flux multimédia (F) transmis de la plateforme de distribution numérique d'applications interactives au terminal client, générant au moins un flux multimédia modifié (F_{M}) conforme à au moins un deuxième protocole (P₂) de communication, ledit au moins un deuxième protocole de communication étant distinct dudit premier protocole de communication,
- un module de transmission (45) dudit au moins un flux multimédia modifié (F_{M}) à au moins un dispositif de restitution (51) en utilisant ledit au moins un deuxième protocole (P₂) de communication.

Par ailleurs, optionnellement (représenté en pointillé) le dispositif intermédiaire 10 comprend en outre un module de duplication (440), du flux multimédia (F) transmis au terminal client, délivrant ledit flux multimédia conforme au premier protocole de communication (P₁), dit flux multimédia dupliqué (F_{D}), ledit module de duplication (440) recevant ledit flux multimédia (F) transmis au terminal client par ladite plateforme (20) de distribution numérique d'applications interactives, et retransmettant, après duplication, ledit flux multimédia (F) audit terminal client.

Ces différents modules 440, 44 et 45 peuvent être des composants pilotés par l'unité de traitement 42, éventuellement implémentés sous une forme logicielle.

## Revendications

1. Procédé (100) de traitement de flux multimédia entre une plateforme (20) de distribution numérique d'applications interactives et un terminal (30) client, connectés au travers d'un réseau de communication et communiquant entre eux selon un premier protocole (P₁) de communication, **caractérisé en ce qu'**il comprend les étapes suivantes, mises en oeuvre par un dispositif intermédiaire (10) distinct du terminal client :
- modification (130) d'un flux multimédia (F_{D}) conforme au premier protocole de communication (P₁), obtenu à partir d'un flux multimédia (F) transmis de la plateforme de distribution numérique d'applications interactives au terminal client, générant au moins un flux multimédia modifié (F_{M}) conforme à au moins un deuxième protocole (P₂) de communication, ledit au moins un deuxième protocole de communication étant distinct dudit premier protocole de communication,
- transmission (140) dudit au moins un flux multimédia modifié (F_{M}) à au moins un dispositif de restitution (51, 52, 53, 54, 55) en utilisant ledit au moins un deuxième protocole (P₂) de communication.

2. Procédé de traitement de flux multimédia selon la revendication 1, **caractérisé en ce qu'**il comprend une étape de duplication (120), par la plateforme (20) de distribution numérique d'applications interactives, dudit flux multimédia (F) transmis au terminal client, délivrant ledit flux multimédia conforme au premier protocole de communication (P₁), dit flux multimédia dupliqué (F_{D}), ledit flux multimédia dupliqué (F_{D}) étant transmis de la plateforme (20) de distribution numérique d'applications interactives au dispositif intermédiaire (10).

3. Procédé de traitement de flux multimédia selon la revendication 1, **caractérisé en ce qu'**il comprend une étape de duplication (120), par le dispositif intermédiaire (10) du flux multimédia (F) transmis au terminal client, délivrant ledit flux multimédia conforme au premier protocole de communication (P₁), dit flux multimédia dupliqué (F_{D}), le flux multimédia (F) étant reçu par le dispositif intermédiaire (10) en provenance de la plateforme (20) de distribution numérique d'applications interactives avant d'être retransmis vers le terminal client.

4. Procédé de traitement de flux multimédia selon l'une des revendications 1 à 3, **caractérisé en ce qu'**il comprend une étape préalable de réception (110) d'une information (I_A) représentative d'une autorisation de duplication dudit flux multimédia transmis (F) au terminal client, émise par une entité appartenant au groupe comprenant :
- ledit terminal client,
- ladite plateforme de distribution numérique d'applications interactives,
- un fournisseur d'accès audit réseau de communication.

5. Procédé de traitement de flux multimédia selon l'une des revendications 1 à 4, **caractérisé en ce que** ladite étape de modification (130) comprend au moins une étape de mémorisation (137) d'une information (I_P₂) représentative dudit au moins un deuxième protocole de communication.

6. Procédé de traitement de flux multimédia selon l'une des revendications 1 à 5, **caractérisé en ce que** ladite étape de modification (130) comprend une étape de désencapsulation (131) dudit flux multimédia conforme au premier protocole de communication (P₁) délivrant des paquets de données désencapsulés et une étape d'encapsulation (136) selon ledit au moins un deuxième protocole de communication (P₂), ledit au moins un flux multimédia modifié (F_{M}) étant généré à partir de ladite encapsulation (136) desdits paquets de données désencapsulés .

7. Procédé de traitement de flux multimédia selon la revendication 6, **caractérisé en ce que** ladite étape de modification (130) comprend en outre une étape de décodage (133) selon un premier format de codage des paquets de données désencapsulés, délivrant des données décodées (D_E), et une étape de codage (134) selon un deuxième format de codage, distinct du premier format de codage, desdites données décodées (D_E), délivrant des données encodées destinées à être encapsulées lors de ladite étape d'encapsulation (136).

8. Procédé de traitement de flux multimédia selon la revendication 7 ou 8, **caractérisé en ce que** ladite étape de modification (130) comprend en outre une étape de démutiplexage (132) des paquets de données désencapsulés, délivrant des données démultiplexées destinées à être décodées lors de l'étape de décodage (133), et/ou une étape de multiplexage (135) des données encodées selon le deuxième format de codage, délivrant les données multiplexées destinées à être encapsulées lors de l'étape d'encapsulation (136).

9. Dispositif (10) intermédiaire de traitement de flux multimédia, apte à être utilisé entre une plateforme (20) de distribution numérique d'applications interactives et un terminal (30) client connectés au travers d'un réseau de communication et communiquant entre eux selon un premier protocole (P₁) de communication, **caractérisé en ce que** ledit dispositif intermédiaire comprend :
- un module de modification (44) d'un flux multimédia (F_{D}) conforme au premier protocole de communication (P₁), obtenu à partir d'un flux multimédia (F) transmis de la plateforme de distribution numérique d'applications interactives au terminal client, générant au moins un flux multimédia modifié (F_{M}) conforme à au moins un deuxième protocole (P₂) de communication, ledit au moins un deuxième protocole de communication étant distinct dudit premier protocole de communication,
- un module de transmission (45) dudit au moins un flux multimédia modifié (F_{M}) à au moins un dispositif de restitution (51) en utilisant ledit au moins un deuxième protocole (P₂) de communication.

10. Dispositif (10) intermédiaire de traitement de flux multimédia selon la revendication 9, **caractérisé en ce qu'**il comprend en outre un module de duplication (440), du flux multimédia (F) transmis au terminal client, délivrant ledit flux multimédia conforme au premier protocole de communication (P₁), dit flux multimédia dupliqué (F_{D}),
ledit module de duplication recevant ledit flux multimédia (F) transmis au terminal client par ladite plateforme (20) de distribution numérique d'applications interactives, et retransmettant, après duplication, ledit flux multimédia (F) audit terminal client.

11. Système de traitement de flux multimédia comprenant une plateforme (20) de distribution numérique d'applications interactives et un terminal (30) client, connectés au travers d'un réseau de communication et communiquant entre eux selon un premier protocole (P₁) de communication, ladite plateforme (20) de distribution numérique d'applications interactives transmettant audit terminal (30) client un flux multimédia (F) conforme audit premier protocole,
ledit système étant **caractérisé en ce qu'**il comprend un dispositif intermédiaire (10) selon la revendication 9 et **en ce que** la plateforme (20) de distribution numérique d'applications interactives comprend un module de duplication (21) dudit flux multimédia (F) transmis par ladite plateforme au terminal client, délivrant un flux multimédia (F_{D}), conforme au premier protocole de communication (P₁), et destiné à être transmis audit dispositif intermédiaire (10).

12. Programme d'ordinateur comportant des instructions de code de programme d'ordinateur pour l'exécution des étapes du procédé de traitement de flux multimédia selon l'une quelconque des revendications 1 à 8, lorsque ledit programme est exécuté par un ordinateur ou un processeur.
